(19) **Europäisches Patentamt / European Patent Office / Office européen des brevets**

(11) **EP 4 506 564 A1**

(12) # EUROPEAN PATENT APPLICATION
published in accordance with Art. 153(4) EPC

(43) Date of publication:
**12.02.2025 Bulletin 2025/07**

(21) Application number: **24798715.9**

(22) Date of filing: **24.05.2024**

(51) International Patent Classification (IPC):
*F03H 1/00* (2006.01)   *B64G 1/40* (2006.01)

(52) Cooperative Patent Classification (CPC):
**B64G 1/40; F03H 1/00; F03H 99/00**

(86) International application number:
**PCT/JP2024/019153**

(87) International publication number:
**WO 2024/247909 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023 JP 2023095018**

(71) Applicant: **Muscat Space Engineering Co., Ltd.
Munakata-shi, Fukuoka 811-3406 (JP)**

(72) Inventor: **HATTA, Shinji
Munakata-shi, Fukuoka 8114145 (JP)**

(74) Representative: **Winter, Brandl - Partnerschaft
mbB
Alois-Steinecker-Straße 22
85354 Freising (DE)**

(54) **ARTIFICIAL OBJECT CONTROL METHOD, ARTIFICIAL OBJECT CONTROL DEVICE, AND ARTIFICIAL OBJECT COMPRISING SAME**

(57)   There are provided an artificial object control method and an artificial object control apparatus that do not require a special propellant and control an artificial object with high degree of freedom, and an artificial object including the artificial object control apparatus.

The artificial object control method is a control method of controlling an artificial object 100 near any of planets including the earth or near a satellite in outer space. The control method includes: accelerating and ejecting electrons to increase a potential of the artificial object 100 as compared with a state where no electron is emitted; promoting capture of electrons present near the artificial object 100 as compared with the state where no electron is emitted; accelerating and ejecting the captured electrons; and changing momentum or/and angular momentum of the artificial object 100 by reaction caused in response to momentum applied to the accelerated and ejected electrons.

Fig. 2

**Description**

[Technical Field]

The present invention relates to an artificial object control method, an artificial object control apparatus, and an artificial object including the artificial object control apparatus.

[Background Art]

For an artificial object in outer space such as an artificial satellite and space debris, which constantly flies in the outer space, a fixed position has no significance, and it is important to adjust velocity (to change velocity vector) such that the artificial object passes through a predetermined space position at a predetermined time. The adjustment of the velocity is referred to as orbit control, and an apparatus adjusting the velocity of the artificial object for the orbit control is referred to as a propulsion apparatus. In a case where disturbance is applied, the orbit control includes maintaining a state before the disturbance is applied.

Further, directions of an observation apparatus and a communication apparatus mounted on the artificial object are also important. Thus, it is necessary to adjust a direction of the artificial object. The adjustment of the direction of the artificial object is referred to as attitude control, and the propulsion apparatus is also used for the attitude control. In a case where disturbance is applied, the attitude control includes maintaining a state before the disturbance is applied. In the following, the orbit control and the attitude control are collectively referred to as control.

As an artificial object control apparatus, a micro rocket called a propulsion device (thruster) has been used, and is disclosed in, for example, Non Patent Literature 1.

In recent years, an electric propulsion device is used as a higher-performance propulsion device. Examples of the electric propulsion device, which are increasingly used in practice, include an ion engine, a Hall thruster, and a field emission electric propulsion device (FEEP) categorized into an electric propulsion device of an electrostatic acceleration type. These propulsion devices are disclosed in, for example, Non Patent Literature 1, Non Patent Literature 2, Non Patent Literature 3, Non Patent Literature 4, and the like.

As an ion beam source used for the ion engine, a microwave discharging type ion beam source, a highfrequency discharging type ion beam source, a direct-current discharging type ion beam source, and the like are known. For example, Patent Literature 1 discloses an invention relating to an ion beam source that uses a microwave to generate plasma. In the invention, a microwave is introduced into a plasma chamber, raw material gas supplied to the plasma chamber is ionized by the microwave to generate plasma. Patent Literature 2 and Non Patent Literature 3 each discloses a field emission electric propulsion device. The propulsion device applies an intense electric field to a liquid metal or ion liquid to generate ionized liquid droplets.

Examples of a propulsion apparatus without a propellant include a solar sail converting solar radiation pressure into propulsion force, and an electrodynamic tether. For example, Patent Literature 3 discloses an invention relating to an electrodynamic tether. In the invention, an electric current is caused to flow through a long conductive tether (cord or rope) to generate interaction with a magnetic field near the earth.

[Citation List]

[Patent Literature]

[Patent Literature 1]
Japanese Patent Laid-Open No. 2017-084818
[Patent Literature 2]
Japanese Patent Laid-Open No. 2020-532671
[Patent Literature 3]
Japanese Patent Laid-Open No. 2021-182537

[Non Patent Literature]

[Non Patent Literature 1]
Ronald Humble, "Space Propulsion Analysis and Design", Learning Solutions, 1995/9/1, ISBN-13: 978-0070313200

[Non Patent Literature 2]
Robert G. Jahn, "Physics of Electric Propulsion", Dover Publications, 2006/5/26, ISBN-13: 978-0486450407
[Non Patent Literature 3]
K. Kuriki and Y. Arakawa, "Introduction to Electric Propulsion", University of Tokyo Press, 2003/5/31, ISBN-13: 978-4130628051 (in Japanese)
[Non Patent Literature 4]
H. Kuninaka, K. Nishiyama, et al., "Ion Engines for Powered Flight in Space", Corona Publishing Co., Ltd., 2006/11/15, ISBN-13: 978-4339012286 (in Japanese)
[Non Patent Literature 5]
J. Ishikawa, "The Charged Particle Beam Engineering", Corona Publishing Co., Ltd., 2001/5/1, ISBN-13: 978-4339007343 (in Japanese)

[Summary of Invention]

[Technical Problem]

In a propulsion method disclosed in Patent Literature 1, raw material gas called a propellant is necessary to operate the ion engine of the artificial object. In other words, the propulsion method disclosed in Patent Literature 1 requires specific raw material gas to propel the artificial object.

In a propulsion method disclosed in Patent Literature 2, a specific propellant such as a molten metal or an ion liquid is necessary to operate the field emission electric propulsion device. In other words, the propulsion method disclosed in Patent Literature 2 requires a specific substance to propel the artificial object.

Therefore, in both the propulsion method disclosed in Patent Literature 1 and the propulsion method disclosed in Patent Literature 2, when all the propellant previously mounted on the artificial object is consumed, the propulsion apparatus cannot work. In addition, in all the propulsion methods disclosed in Non Patent Literature 1, Non Patent Literature 2, Non Patent Literature 3, and Non Patent Literature 4, when all the propellant previously mounted on the artificial object is consumed, the propulsion apparatus cannot work.

In the propulsion methods disclosed in Patent Literature 1, Patent Literature 2, and Non Patent Literature 4, the propellant is decomposed into ions and electrons, only ions are ejected at high velocity, and the artificial object is propelled by reaction thereof. To neutralize an ion beam while maintaining electric neutrality of the artificial object, it is necessary to mix the electrons to the ion beam and to emit the resultant ion beam by using an electron emission apparatus called a neutralizer.

Therefore, the inventions disclosed in Patent Literatures 1 and 2 require both an apparatus for accelerating and emitting the ions and an apparatus for emitting the electrons.

The propulsion method disclosed in Patent Literature 3 has a restriction that propulsion force works only in a direction orthogonal to magnetic field lines. In addition, it is necessary to attach an apparatus emitting electrons to the outer space from a part of the tether to cause an electric current to flow through the tether. Moreover, a long conductive cord called a tether is necessary, which inevitably increases a scale of the apparatus.

The existing propulsion apparatuses are described above. In a case where an energy when electrons or ions are emitted from the emission apparatus is denoted as E, the following expressions (1) and (2) are established.

$$E = \frac{1}{2}m_e v_e{}^2 = \frac{1}{2}m_i v_i{}^2 \qquad \cdots \text{Expression (1)}$$

Therefore,

$$v_e = \sqrt{\frac{m_i}{m_e}}\, v_i \quad , \quad m_e v_e = \sqrt{\frac{m_e}{m_i}}\, m_i v_i \qquad \cdots \text{Expression (2)}$$

Therefore, when energies for acceleration are equal to each other, the electrons can be accelerated to high velocity by a square root of a mass ratio of the ions to the electrons, but only 1/square-root of momentum is obtained, namely, only small thrust is obtained.

An atomic weight of xenon that is a propellant widely used in the ion engine as described above is about 131.3, and a mass ratio of xenon to electrons is about 240000. An atomic weight of indium that is a propellant used for the field emission electric propulsion device is 114.8, and a mass ratio of indium to electrons reaches about 210000. Therefore, when energies for acceleration are equally applied, thrust by the electrons is about 1/491 of thrust by xenon, and thrust by the electrons is about 1/460 of thrust by indium. Therefore, it has been considered that use of the electrons for propulsion is not practical.

For example, in the ion engine using xenon as the propellant disclosed in Non Patent Literature 4, an ion beam current per one ion engine is 140 mA, and thrust of 8.5 mN is generated. Average velocity of the electrons following the ions, emitted from the neutralizer is equal to average velocity of the ions. Therefore, the velocity is about 30000 m/s, and momentum of one electron is about $2.7E^{-26}$ Ns. Further, the amount of current of electrons emitted from the neutralizer is equal to the amount of current of the ion beam. Therefore, the number of emitted electrons is $8.7E^{17}$ pieces/s, and thrust per one neutralizer is about $2.3E^{-8}$ N.

A mass of the artificial object provided with the ion engine is about 500 kg. Therefore, thrust per 1 kg of mass of the artificial object is about $4.7E^{-11}$ N/kg. Actually, three ion engines are simultaneously operated, and thrust is about $1.41E^{-10}$ N/kg in total.

Therefore, an object of the present invention is to provide an artificial object control method and an artificial object control apparatus that do not require such a special propellant and control an artificial object with high degree of freedom, and an artificial object including the artificial object control apparatus. Note that control includes attitude control, orbit control (propulsion, acceleration/deceleration), and the like.

[Solution to Problem]

A control method according to the present invention is a control method of controlling an artificial object in outer space, and includes: capturing electrons present near the artificial object; accelerating and ejecting the captured electrons; and changing momentum or/and angular momentum of the artificial object.

The outer space used herein is an entire space separated from a surface of the earth by 100 km or more, and includes all other heavenly bodies, artificial heavenly bodies, and the like.

As a result, the captured electrons present near the artificial object are accelerated and ejected in addition to electrons held by the artificial object, and the momentum or/and the angular momentum of the artificial object are changed.

In the control method, when a potential of an electron collection surface capturing the electrons present near the artificial object in the outer space is denoted as $V_s$, a highest potential of ejection means for accelerating the captured electrons with electrostatic force is denoted as $V_{max}$, and a potential of a surface ejecting the accelerated electrons is denoted as $V_{emit}$, a voltage ($V_s$ - $V_{emit}$) used for acceleration of the electrons is preferably 15% or more of a total application voltage ($V_{max}$ - $V_{emit}$).

In the control method, the captured electrons are preferably accelerated and ejected by using any one of a thermoelectron emission electron source, a field emission electron source, a photoelectron emission electron source, a hollow cathode electron source, and a microwave discharge electron source, or with the electrons accelerated and ejected by using any of the electron sources being as primary electrons, the electrons are preferably accelerated and ejected by using a multiplication effect caused by secondary electrons.

In the control method, a thrust vector of the artificial object is preferably adjusted by applying an electric field or/and a magnetic field deflecting a flight direction of the captured electrons, to the captured electrons.

Another control method according to the present invention is a control method of controlling an artificial object in outer space, and includes: capturing electrons present near the artificial object; accelerating and ejecting, as anions, the captured electrons with liquid droplets of ion liquid or low-melting-point metal liquid droplets; and changing momentum or/and angular momentum of the artificial object.

A control apparatus according to the present invention is a control apparatus controlling an artificial object in outer space, and includes an electron collection surface configured to capture electrons present near the artificial object, and ejection means for accelerating and ejecting the captured electrons.

In particular, the ejection means preferably includes deflection means for deflecting a flight direction of the ejected electrons by applying an electric field or/and a magnetic field deflecting the flight direction of the electrons.

Another control apparatus according to the present invention is a control apparatus controlling an artificial object in outer space, and includes an electron collection surface configured to capture electrons present near the artificial object, and ejection means for accelerating and ejecting, as anions, the captured electrons with liquid droplets of ion liquid or low-melting-point metal liquid droplets.

An artificial object according to the present invention is an artificial object including any of these control apparatuses.

In particular, the artificial object includes one or more control apparatuses. The one or more control apparatuses preferably generate thrust of $5E^{-9}$ N or more per 1 kg of mass of the artificial object, or the one or more control apparatuses preferably generate torque of $5E^{-10}$ Nm or more per 1 $kgm^2$ for any of three components of principle moment of the artificial object.

[Advantageous Effects of Invention]

By the control method according to the present invention, with such a configuration, the captured electrons present near the artificial object are accelerated and ejected in addition to the electrons held by the artificial object, and the momentum or/and the angular momentum of the artificial object are accordingly changed. Therefore, a special propellant is unnecessary, and the artificial object can be controlled with high degree of freedom.

[Brief Description of Drawings]

[Figure 1] Figure 1 is a schematic configuration diagram of an artificial object control apparatus according to the present invention.
[Figure 2] Figure 2 is a schematic diagram of an artificial object according to the present invention.
[Figure 3] Figure 3 is a schematic configuration diagram illustrating examples of voltage application means and ejection means.
[Figure 4] Figure 4 is a schematic configuration diagram illustrating examples of another voltage application means, another ejection means, and deflection means.
[Figure 5] Figure 5 is a diagram schematically illustrating change in potential near the artificial object.
[Figure 6] Figure 6 is a diagram schematically illustrating change in potential near the artificial object.
[Figure 7] Figure 7 is a diagram to explain inflow/outflow of an electric current of the artificial object.

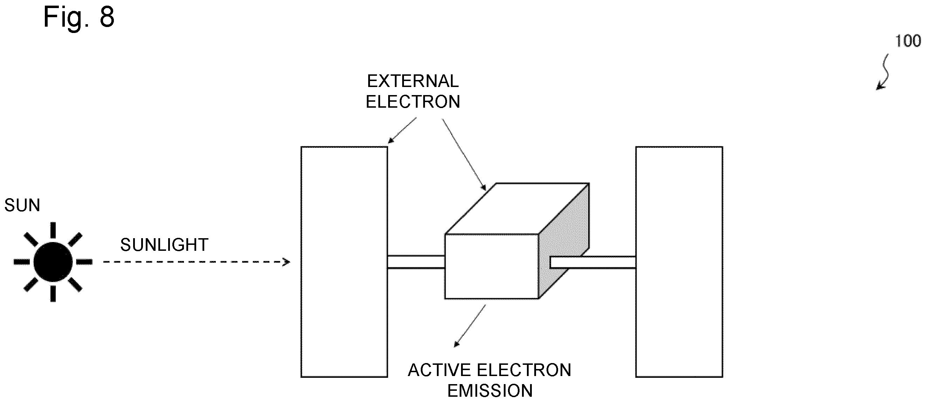

[Figure 8] Figure 8 is a diagram to explain inflow/outflow of the electric current of the artificial object.
[Figure 9] Figure 9 is a schematic configuration diagram of another artificial object control apparatus according to the present invention.

[Description of Embodiment]

An embodiment of the present invention is described below with reference to drawings. Description of components described below is an example (representative example) of the embodiment of the present invention, and the present invention is not limited to the following contents unless the spirit of the present invention is changed.

[Electron Source]

An artificial object control apparatus according to the present invention is an apparatus including an electron source for accelerating and ejecting electrons to outer space. The artificial object control apparatus accelerates and ejects the electrons to the outer space to change momentum or/and angular momentum of an artificial object, thereby propelling the artificial object and changing attitude of the artificial object.

The outer space is not in a true vacuum state, and is full of thin gas and plasma generated by ionization of gas. Particles in the plasma include ions and electrons, and density of the gas and the plasma is high particularly near planets including the earth.

Further, the particles in the plasma randomly fly at thermal motion velocity. As for velocity of thermal motion (thermal velocity), for example, an average of the thermal velocities of the electrons is about 300 km/s at 0.2 eV that is a temperature widely spread near the earth (altitude of 2000 km or less that is referred to as low orbit). In a case of oxygen ions, an average of thermal velocities of the ions is about 1.7 km/s.

In the meantime, the artificial object in a low earth orbit flies at about 7.7 km/s. Therefore, the artificial object in the low earth orbit flies at supersonic velocity relative to the ions, and flies at subsonic velocity relative to the electrons. In other words, the ions in the plasma substantially collide with the artificial object at the velocity of the artificial object from a front side in a travelling direction of the artificial object, whereas the electrons collide with the artificial object from all directions around the artificial object.

A flux of the particles (flow flux, number of collisions per unit time, unit area) in a case where the thermal velocity is dominant as with the electrons is represented by the following expression (3).

$$ f = \frac{1}{4}n\bar{c} = \frac{1}{4}n\sqrt{\frac{8kT}{\pi m}} = \frac{1}{4}n\sqrt{\frac{8eT_{ev}}{\pi m}} = n\sqrt{\frac{eT_{ev}}{2\pi m}} \qquad \cdots \text{Expression (3)} $$

where n is number density of particles,
$\bar{c}$ is an average value of thermal velocities, T is a temperature [K], and $T_{ev}$ is a temperature (electron volt unit) [eV].

As a supplement, a unit of elementary charge e is normally C (coulomb), but when the elementary charge e is multiplied by the temperature $T_{eV}$ in the above-described expression (3), the unit is J/eV for convenience.

The flux of the particles in the above-described expression (3) is the flux of the particles in a case where the artificial object is at a potential equivalent to a potential of the plasma (outer space). In a case of the artificial object having a positive potential, the ions are rejected but the electrons are attracted. In contrast, in a case of the artificial object having a negative potential, the electrons are rejected but the ions are attracted.

Therefore, although the calculation expression is complicated due to a shape of the artificial object and the like as a matter of course, the above-described expression (3) is generally multiplied by a correction term as represented by the following expressions (4) and (5) depending on a case where the electrons/ions are attracted and a case where the electrons/ions are rejected.

(Case where Electrons/Ions are Attracted)

$$f = \frac{1}{4} n \bar{c} (1 + \frac{|e\Phi|}{kT}) = n \sqrt{\frac{kT}{2\pi m}} (1 + \frac{|e\Phi|}{kT}) = n \sqrt{\frac{eT_{eV}}{2\pi m}} (1 + \frac{|\Phi|}{T_{eV}}) \qquad \cdots \text{Expression (4)}$$

where $\varphi$ is a potential on a surface of the artificial object.

(Case where Electrons/Ions are Rejected)

$$f = \frac{1}{4} n \bar{c} \times exp\left(-\frac{|e\Phi|}{kT}\right) = n \sqrt{\frac{kT}{2\pi m}} \times exp\left(-\frac{|e\Phi|}{kT}\right) = n \sqrt{\frac{eT_{eV}}{2\pi m}} \times exp\left(-\frac{|\Phi|}{T_{eV}}\right) \qquad \cdots \text{Expression (5)}$$

Further, since the artificial object floats in the outer space, the artificial object has a floating potential. For example, when the charge held by the artificial object is ±0, the potential of the artificial object is equal to the potential of the outer space. When the artificial object is positively charged, the potential becomes plus potential, whereas when the artificial object is negatively charged, the potential becomes minus potential.

A capacitance of the artificial object to the outer space can be approximated by a capacitance of an isolated conductor as represented by the following expression (6).

From

$$\Phi = \frac{Q}{4\pi\varepsilon_0} \cdot \frac{1}{r} \quad , \quad Q = C\Phi \quad ,$$

$$C = \frac{Q}{\Phi} = \frac{1}{\Phi} = 4\pi\varepsilon_0 r \qquad \cdots \text{Expression (6)}$$

Therefore, when a representative diameter is 1 m, the capacitance is determined as 56 pF. When the representative diameter is 10 cm, the capacitance is determined as 5.6 pF.

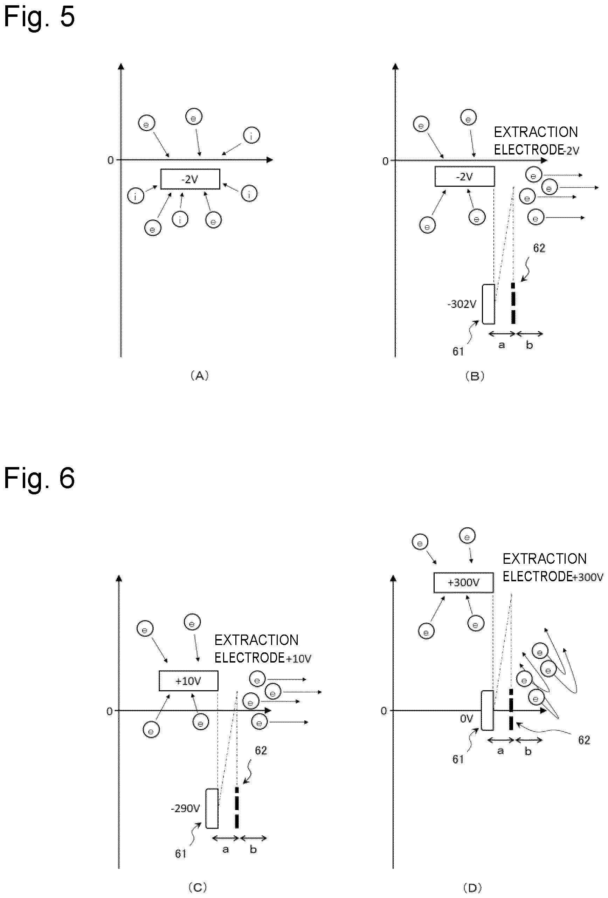

With respect to such a capacitance, inflow/outflow of an electric current as illustrated in Figure 6 occurs. Most of the amount of current is varied depending on a potential and a shape of the satellite. The current of the external electrons and the current of the external ions as illustrated in Figure 6 follow the above-described particle flux multiplied by the charge amount. Photoelectrons have energy of about 1.5 eV. Therefore, when the potential of the artificial object is negative, the photoelectrons flows out, and when the potential of the artificial object becomes positive, the photoelectrons are gradually pulled back to the artificial object and attenuate as represented by the following expression (7). Note that the photoelectrons are not emitted in the shade.

$$exp\left(-\frac{|e\Phi|}{kT}\right) \quad or \quad exp\left(-\frac{|\Phi|}{T_{eV}}\right) \qquad \cdots \text{Expression (7)}$$

Secondary electrons illustrated in Figure 6 are emitted according to a secondary electron emission coefficient of the surface of the artificial object when the ions or electrons from outside (external ions and external electrons) collide with the artificial object. This is represented by a function of collision energy, a collision angle, and surface physical properties.

In a case of the ions, about 0.1 secondary electrons are emitted per collision of one ion, which enables approximation. On the other hand, in a case of the electrons, approximation can be performed based on a physical property database of emission coefficients.

In any case, the number of secondary electrons is increased as the number of colliding external particles is increased. Further, the secondary electrons have energy of about 2 eV, and relationship with the potential of the artificial object is attenuated by increase in potential on the surface with which the external particles collide, based on the above-described expression (7) as with the photoelectrons.

Actively-emitted ions and actively-emitted electrons are emitted by an artificial apparatus. Therefore, the actively-emitted ions and the actively-emitted electrons can be emitted at energy artificially set. However, in a case of the electrons, when the potential of the artificial object is excessively increased beyond the energy at emission, the electrons are pulled back and cannot be emitted. In a case of the ions, when the potential of the artificial object is excessively lowered, the ions cannot be emitted.

The potential of the artificial object is determined to a value at which current balance becomes just zero. At this time, when active electron emission (see Figure 6) is sufficiently greater than inflow of the external electrons when the potential of the artificial object is 0 V, the potential of the artificial object becomes positive relative to the outer space.

In this state, the number of collisions of the ions is reduced with increase in potential of the artificial object. In addition, since the photoelectrons and the secondary electrons are pulled back to the artificial object even though being emitted, emission of the photoelectrons and the secondary electrons becomes substantially zero.

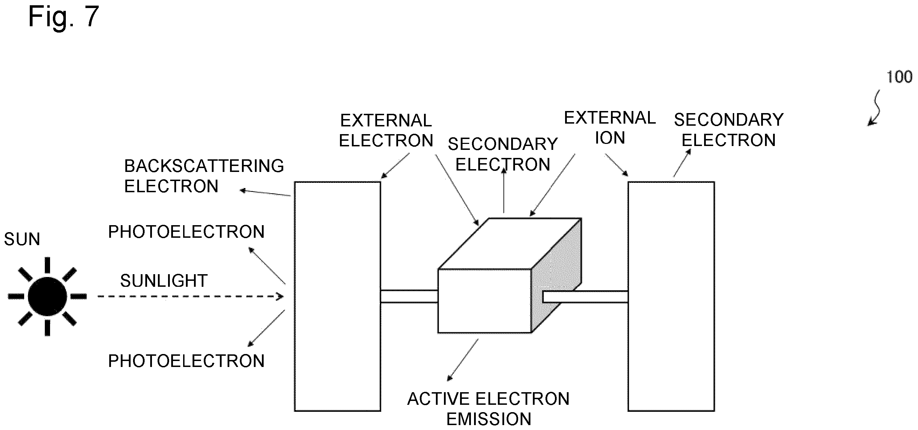

Therefore, as illustrated in Figure 7, inflow/outflow of the external electrons and the active electron emission (actively-emitted electrons) are balanced. The active electron emission illustrated in Figure 7 serves as an electron source for emitting the electrons to the outer space, in the artificial object control apparatus according to the present invention.

The artificial object control apparatus according to the present invention obtains thrust from the momentum of such emitted electrons. In contrast, an existing propulsion device ionizes a propellant mounted on the artificial object, emits ions to obtain thrust, and emits electrons to perform electric neutralization. In contrast, the artificial object control apparatus according to the present invention does not require a special propellant to obtain thrust.

[Artificial Object Control Apparatus]

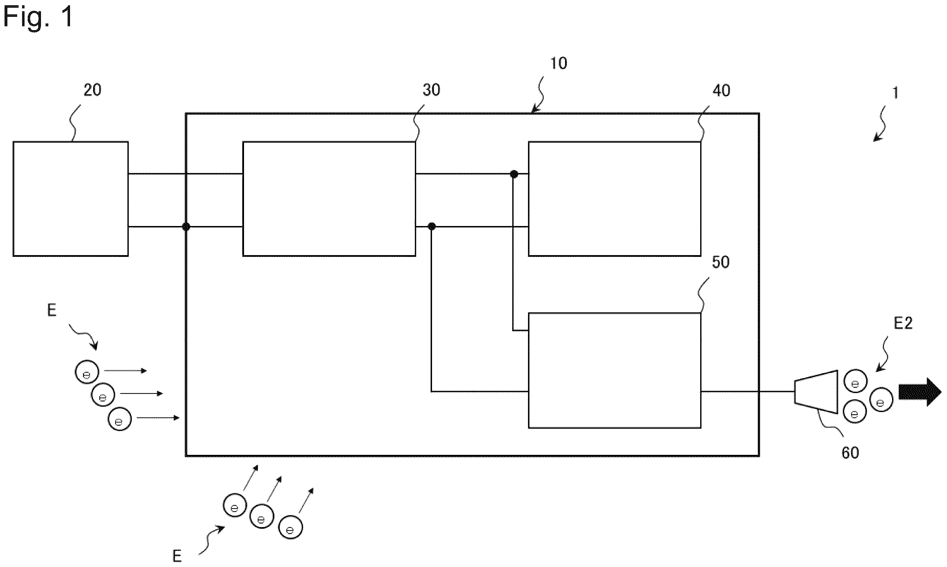

An artificial object control apparatus 1 according to the present invention includes an electron collection surface 10, a power supply device 20, power storage means 30, a main control function 40, voltage application means 50, and ejection means 60 (see Figure 1).

The power supply device 20 is a device for supplying power, such as a solar cell, a nuclear fuel cell, and a battery.

The power storage means 30 is, for example, a DC-DC converter, and a battery for a non-power generation time.

The main control function 40 is a microcomputer for controlling a general load and functions of the artificial object, a communication device, and the like.

The power supply device 20, the power storage means 30, the main control function 40, and the like are provided in an existing artificial object.

The electron collection surface 10 is a conductor portion in a structure of the artificial object, namely, a physical structure such as a casing of the artificial object. Electrons E present near the artificial object in the outer space are captured from the electron collection surface 10.

Although the existing structure of the artificial object can be used as the electron collection surface 10 as described above, a conductor surface can be additionally installed to increase the electron collection surface 10.

The voltage application means 50 is a mechanism for providing electrostatic potential energy to the electrons captured from the electron collection surface 10.

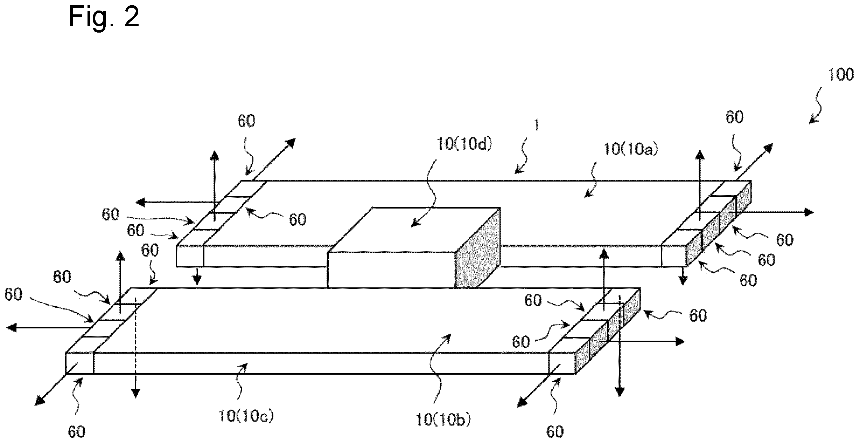

The ejection means 60 is a mechanism ejecting electrons E2 receiving the electrostatic potential energy from the voltage application means 50. In an example illustrated in Figure 2, four ejection means 60 are provided on each of both side surfaces of electron collection surfaces 10a and 10b, and each ejection means can eject the electrons E2 in a designated direction. A plurality of ejection means 60 can be provided at optional positions of an artificial object 100 such as electron collection surfaces 10c and 10d as a matter of course.

The ejection means 60 includes a mechanism applying a voltage necessary depending on a type of the ejection means 60 (cathode) or applying a voltage for improving performance, such as a heater, a filament, a gate, and a grid.

For example, in a case of a hot cathode of a thermoelectron emission type, a heater is necessary. In a case of a field emission type, a gate electrode is necessary as an electron extraction electrode. Therefore, the ejection means 60 can include such heater and gate electrode.

The electrons are accelerated while an electron ejection direction is aligned to a thrust direction, electrostatic potential energy is accordingly converted into electron kinetic energy to apply momentum to the electrons, and thrust of the object is obtained from the momentum. To efficiently obtain the momentum of the electrons, an electrode preferably has a configuration called an electron lens system (electron optical system, or electron optics system). Non Patent Literature 5 can be referred to about details of the electron lens system.

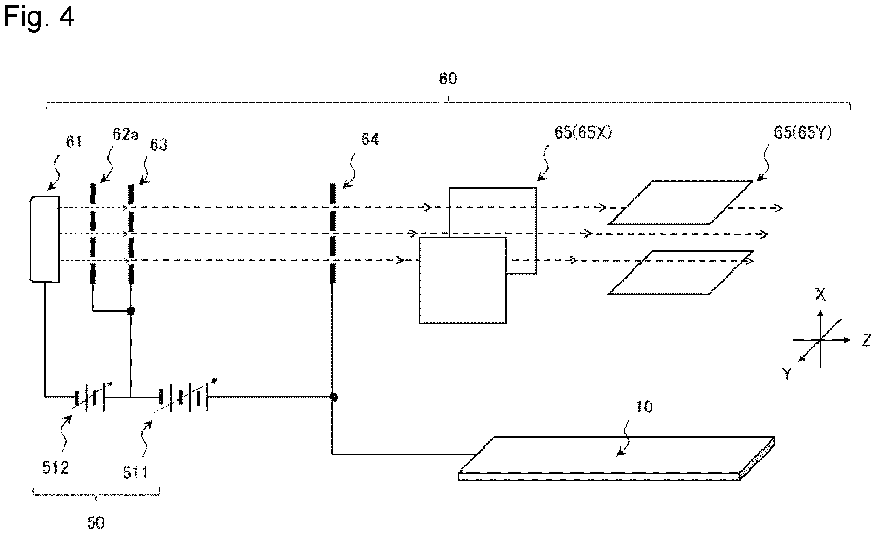

The artificial object 100 according to the present invention is an artificial object or the like including such an artificial object control apparatus 1 (see Figure 2). The artificial object 100 can eject electrons in an optional direction from the ejection means 60 as illustrated in Figure 2 by deflection means 65 described below (see Figure 4). Therefore, the artificial object 100 can be propelled in an optional direction and can be controlled in attitude.

[Artificial Object Control Method]

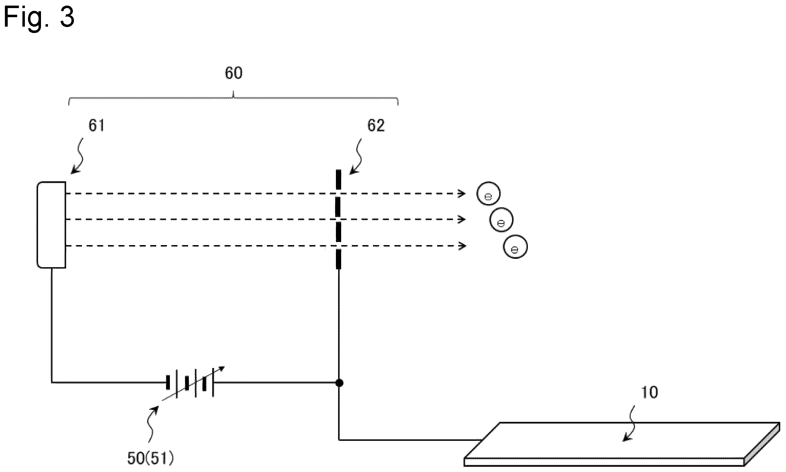

An artificial object control method according to the present invention is described below further with reference to Figures 3 to 6.

Figure 3 is a schematic configuration diagram illustrating examples (minimum configuration) of the voltage application means and ejection means. In the configuration illustrated in Figure 3, an electron extraction/acceleration power supply 51 is used as the voltage application means 50. As the ejection means 60 (electron emission means), a field emission cathode 61 and a gate electrode (electron extraction electrode/acceleration electrode) 62 are used.

Figures 5 and 6 are diagrams schematically illustrating change in potential near the artificial object. In a state where no electron source is present (state where electrons are not actively emitted) as illustrated in Figure 5(A), a potential $V_s$ of the artificial object is in a balanced state of about -2 V by the external electrons (e), the external ions (i), and the like. It is assumed that a potential of the electron collection surface 10 and a potential of the gate electrode (electron extraction electrode/acceleration electrode) 62 are equal to the potential $V_s$ of the entire artificial object. Note that power generation by a solar cell is omitted for simplification of description.

Next, as illustrated in Figure 5(B), the potential of the field emission cathode 61 is lowered by $V_{emit}$ (for example, 300 V) relative to the electron collection surface 10 by the electron extraction/acceleration power supply 51. At this time, when the potential of the gate electrode (electron extraction electrode/acceleration electrode) 62 is maintained at the potential $V_s$ equal to the potential of the artificial object, electrons are emitted from the field emission cathode 61 by an intense electric field of $V_{emit}$.

The emitted electrons are accelerated by a potential difference between the field emission cathode 61 and the gate electrode (electron extraction electrode/acceleration electrode) 62, pass through a lattice or small holes provided in the gate electrode (electron extraction electrode/acceleration electrode) 62, and are ejected to the outer space.

When the electrons are ejected to the outer space, the artificial object is positively charged. Therefore, the potential $V_s$ is increased and becomes positive (for example, +10 V) relative to the outer space, and the potentials of the entire artificial object including the electron collection surface 10, the field emission cathode 61, the gate electrode (electron extraction electrode/acceleration electrode) 62, the voltage application means 50 (electron extraction/acceleration power supply 51), and the like mounted on the artificial object are equally increased at a time (see Figure 6(C)).

When the potential of the electron collection surface 10 is increased in the above-described manner, more external electrons near the artificial object are collected based on the above-described expression (4). The potential of the artificial object is constantly maintained in a state where the amount of current of the collected electrons is balanced with the amount of current of the ejected electrons described above. Thus, the amount of current of the collected electrons and the amount of current of the ejected electrons are constantly maintained.

In a section illustrated in Figure 6(C), the electrons are accelerated by converting the potential energy of +300 V from $V_s$ - $V_{emit}$ (for example, -290 V) to +10 V into kinetic energy. In a section b, the electrons are decelerated by kinetic energy corresponding to -10 V from +10 V to 0 V.

In Figure 6(D), in the section a, the electrons are accelerated by +300 V from 0 V to +300 V. In the section b, the electrons are decelerated by -300 V from +300 V to 0 V.

In a case where the electron source operates but the potential of the artificial object is excessively increased (+300 V) as illustrated in Figure 6(D), the electrons are not emitted. Therefore, the potential of the artificial object is automatically lowered, and inflow/outflow of the external electrons and the active electron emission are balanced.

As described above, in the artificial object control method according to the present invention, thrust is obtained from the momentum of the electrons emitted from the electron source.

When the potential of the electron collection surface 10 is denoted as $V_s$, the highest potential of the electrode accelerating/decelerating the electrons in the ejection means 60 is denoted as $V_{max}$, and the potential of the surface emitting the electrons (for example, field emission cathode 61) is denoted as $V_{emit}$, the voltage ($V_s$ - $V_{emit}$) used for

acceleration of the electrons is preferably 15% or more, more preferably 30% or more, further preferably 50% or more, and most preferably 80% or more of the total application voltage ($V_{max}$ - $V_{emit}$) .

Figure 4 is a schematic configuration diagram illustrating examples of another voltage application means, another ejection means, and deflection means. As illustrated in Figure 4, the ejection means 60 may have another configuration (field emission electron source), or may have a configuration including deflection means 65 (65X and 65Y).

In the configuration illustrated in Figure 4, as the voltage application means 50, an acceleration power supply 511 and a primary electron extraction/secondary electron multiplication power supply 512 are used. As the ejection means 60, the field emission cathode 61, a primary electron gate electrode (primary electron extraction electrode/acceleration electrode) 62a, a secondary electron multiplication apparatus 63, and a secondary gate electrode (secondary electron extraction/acceleration electrode) 64 are used.

Likewise, as for secondary electrons obtained by such a multiplication mechanism, when the potential of the electron collection surface 10 is denoted as $V_s$, the highest potential of the electrode accelerating/decelerating the electrons in the ejection means 60 is denoted as $V_{max}$, and a potential of the surface emitting the electrons (for example, secondary electron multiplication apparatus 63) is denoted as $V_{sec}$, a voltage ($V_s$ - $V_{sec}$) used for acceleration of the electrons is preferably 15% or more, more preferably 30% or more, further preferably 50% or more, and most preferably 80% or more of a total application voltage ($V_{max}$ - $V_{sec}$).

The deflection means 65 is a mechanism deflecting a flight direction of the electrons ejected from the secondary gate electrode (secondary electron extraction/acceleration electrode) 64 in response to application of an electric field or/and a magnetic field deflecting the flight direction of the electrons. The deflection means 65X is a mechanism deflecting the flight direction of the electrons to an X direction, and the deflection means 65Y is a mechanism deflecting the flight direction of the electrons to a Y direction.

The ejection means 60 is not limited to the examples illustrated in Figures 3 and 4, and a hot-cathode field emission electron source, a cold-cathode field emission electron source, a photoelectron emission electron source, a hollow cathode electron source, a microwave discharge electron source, or the like can be used.

[Specific Examples]

In the following, specific examples of the artificial object control method according to the present invention are described.

(Specific Example 1)

Conditions of a specific example 1 are as follows. Values based on the following conditions are essentially repeatedly calculated, but it is assumed that a satellite structure including the electron collection surface is +10 V relative to the outer space (background plasma).

- Orbital altitude: about 550 km
- Orbital velocity: 7.59 km/s
- Plasma density: $1E^{11}/m^3$
- Plasma temperature: 0.2 eV
- Neutral atmospheric density: 3.18E-13kg/m$^3$
- Satellite shape: cube of 10 cm × 10 cm × 10 cm (representative area $S_{body}$ = 0.01 m$^2$), drag coefficient of 2.5, mass of 1 kg
- SAP shape: 14 cm × 28 cm × 2 cm × 2 pieces (electron collection area $S_{SAP}$ = 0.1 m$^2$), SAP surface other than solar cell surface mainly collects electrons
- Active electron emission: about 6 mA, 300 eV

Drag occurring on a satellite main body caused by neutral atmosphere is represented by the following expressions (8) and (9).

(Dynamic Pressure)

$$\frac{1}{2}\rho_0 v^2 = 0.5 \times 3.18 \times 10^{-13} \times 7590^2 = 9.16 \times 10^{-6} \ [\text{Pa}] \quad \cdots \text{Expression (8)}$$

(Neutral Atmospheric Drag)

$$D = S_{body} \times C_D \times \frac{1}{2}\rho_0 v^2 = 0.01 \times 2.5 \times 9.16 \times 10^{-6} = 2.29 \times 10^{-7} \text{ [N]} \quad \cdots \text{Expression (9)}$$

Further, the drag occurring on the satellite main body caused by the ions is smaller by two digits than the above-described neutral atmospheric drag.

The number of electrons collected by the SAP surface per unit time and the electron current are determined by the following expressions (10) and (11) from the above-described expression (9).

(Number of Electrons)

$$\dot{n} = fS_{SAP} = S_{SAP} \times n\sqrt{\frac{eT_{eV}}{2\pi m}}\left(1 + \frac{|\Phi|}{T_{eV}}\right)$$

$$= 0.01 \times 1 \times 10^{11} \times \sqrt{\frac{1.602 \times 10^{-19} \times 0.2}{2 \times 3.14 \times 9.11 \times 10^{-31}}}\left(1 + \frac{10}{0.2}\right) = 3.82 \times 10^{16} \text{ } [^{piece}/_{sec}] \quad \cdots \text{Expression (10)}$$

(Electron Current)

$$I = e\dot{n} = 1.602 \times 10^{-19} \times 3.82 \times 10^{16} = 6.11 \text{ } [mA] \quad \cdots \text{Expression (11)}$$

When the electrons are emitted at energy of 300 eV, velocity and momentum per unit time (thrust) are determined by the following expressions (12) and (13).

$$v = \sqrt{\frac{2e\Phi}{m_e}} = \sqrt{\frac{2 \times 1.602 \times 10^{-19} \times 300}{9.11 \times 10^{-31}}} = 1.027 \times 10^7 \text{ } [^m/_s] \quad \cdots \text{Expression (12)}$$

Therefore, the thrust by the electron emission is as follows.

$$F = \dot{n} \times m_e \times v = 3.82 \times 10^{16} \times 9.11 \times 10^{-31} \times 1.027 \times 10^7 = 3.57 \times 10^{-7} \text{ } [N] \quad \cdots \text{Expression (13)}$$

From the result, it is possible to obtain the thrust substantially opposing to the atmospheric drag by adjustment of the collection area, the acceleration voltage, and the like. In other words, by the artificial object control method according to the present invention, it is possible to perform orbit control of the artificial object without loading a propellant.

(Specific Example 2)

Conditions of a specific example 2 are as follows. Values based on the following conditions are essentially repeatedly calculated, but it is assumed that a satellite structure including the electron collection surface is +30 V relative to the outer space (background plasma).

- Orbital altitude: about 700 km
- Orbital velocity: 7.50 km/s
- Plasma density: $5E^{10}/m^3$
- Plasma temperature: 0.2 eV
- Neutral atmospheric density: 3.61E-14kg/m$^3$
- Satellite shape: cube of 30 cm $\times$ 30 cm $\times$ 30 cm (representative area $S_{body}$ = 0.1 m$^2$), drag coefficient of 2.5, mass of 30 kg
- SAP shape: 50 cm $\times$ 150 cm $\times$ 2 cm $\times$ 2 pieces (electron collection area $S_{SAP}$ = 1.5 m$^2$), SAP surface other than solar cell surface mainly collects electrons

- Active electron emission: about 150 mA, 3000 eV

In the case of the conditions, calculation results are as follows.

- Neutral atmospheric drag: $2.54E^{-7}$ N
- Electron current: 136 mA
- Thrust: $2.51E^{-5}$ N
- Total impulse per one year: 791 Ns

From the results, it is possible to obtain the thrust substantially opposing to the atmospheric drag by adjustment of the collection area, the acceleration voltage, and the like. In addition, it is considered that, to deorbit the satellite having 30 kg (orbit control for shifting satellite to safe orbit where there is no possibility of collisions of satellites after end of operation), total thrust of about 6000 Ns is necessary, and it is estimated that the satellite can be deorbited in about 7.5 years from the total thrust per one year. In other words, by the artificial object control method according to the present invention, it is possible to perform orbit control of the artificial object without loading a propellant.

In addition to the method described so far, the method of using the electrons collected by the electron collection surface for propulsion can be used to improve performance of the field emission electric propulsion devices (FEEP) disclosed in Patent Literature 2 and Non Patent Literature 3.

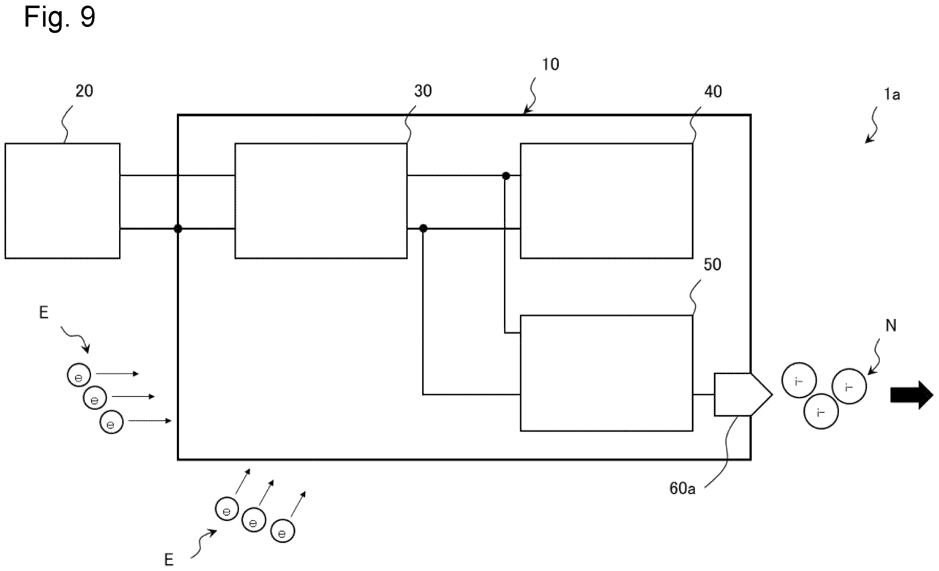

In the existing field emission electric propulsion device, positive ions are accelerated and ejected while a large positive voltage is applied to a propellant such as molten metal and ion liquid, to perform ionization with an intense electric field. At the same time, to neutralize an ion beam while maintaining electric neutrality of the artificial object, an electron emission apparatus called a neutralizer is used to mix the electrons to the ion beam, and the resultant ion beam is emitted. However, in a case of a configuration of a control apparatus 1a (see Figure 9), negative ions N are accelerated and ejected by ejection means 60a (propulsion device and propellant) while a large negative voltage is applied by the voltage application means 50, to perform ionization with an intense electric field, and the negative charges required by the negative ions N are collected as the electrons by the electron collection surface 10, which makes it possible to maintain the electric neutrality of the artificial object.

By the method, it is possible to reduce the number of the neutralizers and the power supplies for operating the neutralizer, and to achieve considerable simplification and reduction in weight of the mechanism of the propulsion device. In the field emission electric propulsion device, charge density of the ion beam is essentially low. Therefore, it is possible to prevent preceding ions from inhibiting travelling of subsequent ions by adjustment of the amount of current and the like.

The artificial object control method and the artificial object control apparatus described above are examples of the artificial object control method and the artificial object control apparatus according to the present invention, and the configuration of the present invention is not limited to the exemplified configuration without departing from the spirit of the present invention.

[Industrial Applicability]

The artificial object control method, the artificial object control apparatus, and the artificial object including the artificial object control apparatus according to the present invention are usable for various artificial objects and are industrially useful because a specific propellant is unnecessary and the artificial object can be controlled with high degree of freedom.

[Reference Signs List]

1, 1a Artificial object control apparatus
10 Electron collection surface
20 Power supply device
30 Power storage means
40 Main control function
50 Voltage application means
51 Electron extraction/acceleration power supply
60 Ejection means
60a Ejection means (propulsion device and propellant)
61 Field emission cathode

62 Gate electrode (electron extraction electrode/acceleration electrode)
62a Primary electron gate electrode (primary electron extraction electrode/acceleration electrode)
63 Secondary electron multiplication apparatus
64 Secondary gate electrode (secondary electron extraction/acceleration electrode)
65, 65X, 65Y Deflection means
100 Artificial object
E Electron present near artificial object in outer space
E2 Ejected electron
N Ejected negative ion

**Claims**

1. A control method of controlling an artificial object near any of planets including the earth or a satellite in outer space, the control method comprising:

    accelerating and ejecting electrons to increase a potential of the artificial object as compared with a state where no electron is emitted;
    promoting capture of electrons present near the artificial object as compared with the state where no electron is emitted;
    accelerating and ejecting the captured electrons; and
    changing momentum or/and angular momentum of the artificial object by reaction caused in response to momentum applied to the accelerated and ejected electrons.

2. The control method according to claim 1, wherein, when a potential of an electron collection surface capturing the electrons present near the artificial object in the outer space is denoted as $V_s$, a highest potential of ejection means for accelerating the captured electrons with electrostatic force is denoted as $V_{max}$, and a potential of a surface ejecting the accelerated electrons is denoted as $V_{emit}$, a voltage $(V_s - V_{emit})$ used for acceleration of the electrons is 15% or more of a total application voltage $(V_{max} - V_{emit})$ .

3. The control method according to claim 1 or 2,
    wherein

    the captured electrons are accelerated and ejected by using any one of a thermoelectron emission electron source, a field emission electron source, and a photoelectron emission electron source, or
    with the electrons accelerated and ejected by using any of the electron sources being as primary electrons, the electrons are accelerated and ejected by using a multiplication effect caused by secondary electrons.

4. The control method according to claim 1 or 2,
    wherein a thrust vector of the artificial object is adjusted by applying an electric field or/and a magnetic field deflecting a flight direction of the captured electrons, to the captured electrons.

5. A control apparatus controlling an artificial object in outer space, the control apparatus comprising:

    ejection means for ejecting electrons to increase a potential of the artificial object as compared with a state where no electron is emitted;
    an electron collection surface configured to capture electrons that are present near any of planets including the earth or a satellite in the outer space and are present near the artificial object; and
    voltage application means for applying electrostatic potential energy to the electrons captured by the electron collection surface, wherein
    the ejection means increases the potential of the artificial object as compared with the state where no electron is emitted, to promote capture of the electrons by the electron collection surface as compared with the state where no electron is emitted, and
    momentum or/and angular momentum of the artificial object is changed by reaction caused in response to momentum applied to the captured, accelerated, and ejected electrons by using the electron collection surface, the voltage application means, and the ejection means.

6. The control apparatus according to claim 5, wherein the ejection means includes deflection means for deflecting a flight direction of the ejected electrons by applying an electric field or/and a magnetic field deflecting the flight direction of the electrons.

7. An artificial object comprising the control apparatus according to claim 5 or **6.**

8. An artificial object comprising one or more control apparatuses according to claim 5 or 6, wherein

the one or more control apparatuses generate thrust of $5E^{-9}$ N or more per 1 kg of mass of the artificial object, or the one or more control apparatuses generate torque of $5E^{-10}$ Nm or more per 1 kgm$^2$ for any of three components of principle moment of the artificial object.

Fig. 1

EP 4 506 564 A1

Fig. 2

Fig. 3

Fig. 4

Fig. 5

(A)

(B)

Fig. 6

(C)

(D)

EP 4 506 564 A1

Fig. 7

Fig. 8

Fig. 9

EP 4 506 564 A1

## INTERNATIONAL SEARCH REPORT

| International application No. |
| --- |
| **PCT/JP2024/019153** |

### A. CLASSIFICATION OF SUBJECT MATTER

*F03H 1/00*(2006.01)i; *B64G 1/40*(2006.01)i
FI:   F03H1/00 Z; B64G1/40 500

According to International Patent Classification (IPC) or to both national classification and IPC

### B. FIELDS SEARCHED

Minimum documentation searched (classification system followed by classification symbols)
F03H1/00; B64G1/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | US 2014/0223883 A1 (CONNER, Paul Howard) 14 August 2014 (2014-08-14) | 1-8 |
| A | JP 2020-129512 A (JAPAN AEROSPACE EXPLORATION AGENCY) 27 August 2020 (2020-08-27) | 1-8 |
| A | WO 2020/031399 A1 (HITACHI HIGH-TECHNOLOGIES CORPORATION) 13 February 2020 (2020-02-13) | 1-8 |
| A | JP 2021-176171 A (TOKYO ELECTRON LIMITED) 04 November 2021 (2021-11-04) | 1-8 |
| A | JP 2019-120160 A (MATSUMURA, Toru) 22 July 2019 (2019-07-22) | 1-8 |
| A | JP 6-93959 A (ITO, Hidemi) 05 April 1994 (1994-04-05) | 1-8 |
| A | JP 2018-525557 A (SAFRAN AIRCRAFT ENGINES) 06 September 2018 (2018-09-06) | 1-8 |
| A | EP 3375714 A1 (UNIVERSIDAD CARLOS III DE MADRID) 19 September 2018 (2018-09-19) | 1-8 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 July 2024** | **23 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/019153**

**C.      DOCUMENTS CONSIDERED TO BE RELEVANT**

| Category* | Citation of document, with indication, where appropriate, of the relevant passages | Relevant to claim No. |
|-----------|-----------------------------------------------------------------------------------|-----------------------|
| A | CN 106286179 A (CHU, Longfei) 04 January 2017 (2017-01-04) | 1-8 |
| A | JP 2019-501496 A (AGC FLAT GLASS NORTH AMERICA, INC.) 17 January 2019 (2019-01-17) | 1-8 |

Form PCT/ISA/210 (second sheet) (July 2022)

INTERNATIONAL SEARCH REPORT
Information on patent family members

International application No.

**PCT/JP2024/019153**

| Patent document cited in search report | | | Publication date (day/month/year) | Patent family member(s) | | | Publication date (day/month/year) |
|---|---|---|---|---|---|---|---|
| US | 2014/0223883 | A1 | 14 August 2014 | (Family: none) | | | |
| JP | 2020-129512 | A | 27 August 2020 | US | 2022/0157551 | A1 | |
| | | | | WO | 2020/166155 | A1 | |
| | | | | EP | 3926657 | A1 | |
| WO | 2020/031399 | A1 | 13 February 2020 | (Family: none) | | | |
| JP | 2021-176171 | A | 04 November 2021 | (Family: none) | | | |
| JP | 2019-120160 | A | 22 July 2019 | (Family: none) | | | |
| JP | 6-93959 | A | 05 April 1994 | (Family: none) | | | |
| JP | 2018-525557 | A | 06 September 2018 | US | 2018/0216606 | A1 | |
| | | | | WO | 2017/006056 | A1 | |
| | | | | FR | 3038663 | A1 | |
| | | | | CN | 107850055 | A | |
| EP | 3375714 | A1 | 19 September 2018 | WO | 2017/081351 | A1 | |
| CN | 106286179 | A | 04 January 2017 | (Family: none) | | | |
| JP | 2019-501496 | A | 17 January 2019 | WO | 2017/105673 | A1 | |
| | | | | KR | 10-2018-0103909 | A | |
| | | | | CN | 108699691 | A | |

Form PCT/ISA/210 (patent family annex) (July 2022)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017084818 A
- JP 2020532671 A
- JP 2021182537 A


**Non-patent literature cited in the description**

- **RONALD HUMBLE**. Space Propulsion Analysis and Design. *Learning Solutions*, 01 September 1995, ISBN 13: 978-0070313200
- **ROBERT G. JAHN**. Physics of Electric Propulsion. *Dover Publications*, 26 May 2006, ISBN 13: 978-0486450407
- **K. KURIKI** ; **Y. ARAKAWA**. Introduction to Electric Propulsion. University of Tokyo Press, 31 May 2005
- **H. KUNINAKA** ; **K. NISHIYAMA et al.** Ion Engines for Powered Flight in Space. Corona Publishing Co., Ltd., 15 November 2006
- **J. ISHIKAWA**. The Charged Particle Beam Engineering. Corona Publishing Co., Ltd., 05 January 2001